**Europäisches Patentamt**

**European Patent Office**

**Office européen des brevets**

(19)

(11) Numéro de publication : **0 501 900 A1**

(12)
# DEMANDE DE BREVET EUROPEEN

(21) Numéro de dépôt : **92470008.1**

(22) Date de dépôt : **27.02.92**

(51) Int. Cl.$^5$ : **G01D 1/00**, G01F 15/06

(30) Priorité : **01.03.91 FR 9102638**

(43) Date de publication de la demande :
**02.09.92 Bulletin 92/36**

(84) Etats contractants désignés :
**BE DE ES FR GB IT**

(71) Demandeur : **SOCAM**
**290 avenue du 8-Mai-1945**
**F-69140 Rillieux la Pape (FR)**

(72) Inventeur : **Heidinger, Bruno**
**18, Pré Hayer**
**F-54700 Pont-a-Mousson (FR)**
Inventeur : **Beltz, Jacques**
**3, Clos des Prémontrés**
**F-54700 Blenod les Pont-a-Mousson (FR)**
Inventeur : **Fourel, Christian**
**34, rue Edouard Grisjean**
**F-54520 Laxou (FR)**
Inventeur : **Bonnefond, Dominique**
**8D, avenue du Général de Gaulle**
**F-69300 Caluire (FR)**

(74) Mandataire : **Puit, Thierry et al**
**Centre de Recherches de Pont-à-Mousson**
**Service de Propriété Industrielle Boîte Postale 109**
**F-54704 Pont-à-Mousson Cédex (FR)**

(54) **Procédé d'analyse et de visualisation de mesures enregistrées sur un réseau de fluide.**

(57)    Procédé d'analyse et de visualisation de mesures enregistrées sur un réseau de fluide (7).

Le procédé comprend au moins les étapes successives suivantes :
— une programmation d'un enregistreur (1),
— une prise des mesures sur le réseau de fluide (7) dite acquisition,
— un déchargement des mesures dans un fichier,
— une exploitation des mesures suivant une fonction permettant d'analyser et de visualiser lesdites mesures.

Fig.1

EP 0 501 900 A1

La présente invention est relative à un procédé d'analyse et de visualisation de mesures enregistrées sur un réseau de fluide.

La présente invention a plus particulièrement pour objet un procédé et un dispositif d'analyse et de visualisation de mesures enregistrées par un moyen d'acquisitions comprenant un enregistreur comportant au moins un microcontrôleur, une mémoire vive, une mémoire morte programmée et une horloge

Ces procédé et dispositif (voir par exemple la topographie 0029 TPS 90 au nom de la Demanderesse) permettent l'analyse des informations provenant d'un compteur d'eau, notamment le débit.

Les limitations que cette technique connaît actuellement proviennent du fait que les acquisitions sont faites en mode impulsionnel et que le procédé n'analyse que ce type de mesures. Seuls les compteurs fournissent des informations en mode impulsionnel.

Ainsi les seules analyses et visualisations possibles proviennent des mesures fournies par les compteurs.

L'invention a pour but de fournir aux exploitants de réseaux de fluide, un procédé et un dispositif qui permettent d'enregistrer de manière automatique et autonome les différentes variations que connaît un réseau de fluide, de traiter et ensuite de visualiser l'ensemble des mesures prises sur le réseau telles que le débit, la pression, le niveau de remplissage d'un château d'eau etc.

A cet effet, l'invention a pour objet un procédé d'analyse et de visualisation de mesures enregistrées sur un réseau de fluide par un moyen d'acquisition comprenant un enregistreur qui comporte un microcontrôleur, une mémoire vive, une mémoire morte programmée et une horloge. Ledit procédé comprend au moins les étapes successives suivantes :

– une programmation de l'enregistreur,

– une prise des mesures sur le réseau de fluide dite acquisition,

– un déchargement des mesures dans un fichier,

– une exploitation des mesures suivant une fonction permettant d'analyser et de visualiser lesdites mesures.

L'invention a également pour objet une installation d'analyse et de visualisation de mesures enregistrées sur un réseau de fluide destinée à un tel procédé, du type comprenant un moyen d'acquisition comportant au moins un microcontrôleur, une mémoire vive, une mémoire morte programmée et une horloge, caractérisé en ce que ledit moyen d'acquisition comporte un dispositif de conversion des grandeurs analogiques, mesurées par un capteur, en impulsions.

Les caractéristiques et avantages ressortiront à la suite de la description qui va suivre faite en référence aux figures annexées données à titre d'exemple et parmi lesquelles :

– la Fig. 1 représente une installation d'analyse et de visualisation de mesures enregistrées sur un réseau d'eau.

– la Fig. 2 est un schéma fonctionnel d'un enregistreur entrant dans une installation selon l'invention correspondant à la Fig. 1.

– la Fig. 3 est un schéma fonctionnel d'un ordinateur d'une installation selon l'invention correspondant à la Fig. 1.

– la Fig. 4 est un organigramme des différentes options du procédé selon l'invention.

– la Fig. 5 est un organigramme illustrant les différentes opérations d'une programmation correspondant à une étape du procédé selon l'invention correspondant à la Fig. 4.

– la Fig. 6 est un organigramme illustrant les différentes opérations d'un déchargement des mesures dans un fichier, correspondant à une option du procédé selon l'invention correspondant à la Fig. 4.

– la Fig. 7 est un organigramme illustrant les différentes opérations d'une exploitation des mesures suivant une fonction permettant d'analyser et de visualiser les mesures, correspondant à une option du procédé selon l'invention correspondant à la Fig. 4.

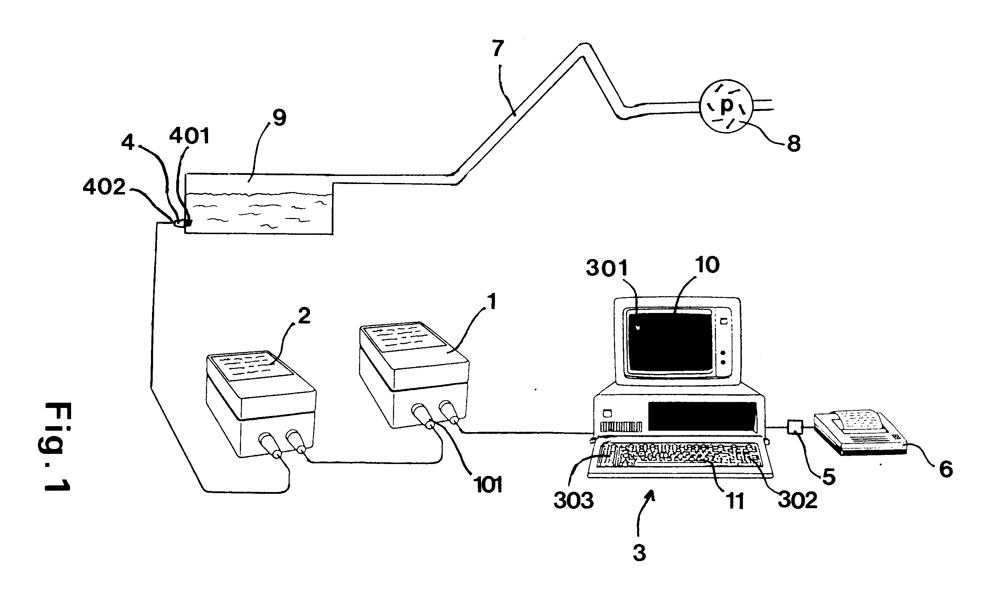

Suivant l'exemple d'exécution, représenté à la Fig. 1, une installation pour la mise en oeuvre du procédé selon l'invention comporte essentiellement un capteur 4, qui par son dispositif de sortie 402, est connecté à un dispositif de conversion des grandeurs analogiques 2. Le dispositif de conversion des grandeurs analogiques 2 est connecté à un enregistreur 1 au moyen du dispositif d'entrée mesure 101 de ce dernier. Un ordinateur 3 est branché sur l'enregistreur 1. L'ordinateur 3 comprend une unité d'affichage 10 et un clavier 11. L'unité d'affichage 10 affiche un curseur 301. Le clavier 11 comporte des touches 302 permettant le déplacement du curseur 301 et des touches 303 permettant le fonctionnement du clavier 11. Une imprimante 6 est branchée sur l'ordinateur 3 par l'intermédiaire d'une clé électronique 5.

La clé électronique 5 possède deux connecteurs.

L'ordinateur 3 est représenté sur le site, mais il peut également se trouver dans un bureau et ne pas être immédiatement raccordé à l'enregistreur 1.

Le capteur 4, par l'intermédiaire de son dispositif d'entrée 401 mesure et enregistre les données relevées sur un réseau de fluide 7. Dans l'exemple représenté sur la Fig. 1, le réseau 7 comprend une pompe 8 et un réservoir 9. Les données relevées par le capteur 4 peuvent être : la pression, la vitesse, la hauteur du fluide ou autres.

Dans cette installation, le capteur 4 transforme les données relevées en un courant ou une tension. Le dispositif de conversion des grandeurs analogiques 2 convertit le courant ou la tension en impulsions. L'enregistreur 1 compte les impulsions.

Celles-ci sont transférées à l'ordinateur 3.

Le capteur 4 comprend un cordon équipé d'un connecteur à visser, étanche qui s'adapte directement au dispositif de conversion des grandeurs analogiques 2. D'autres capteurs peuvent être utilisés comme un capteur dont le cordon s'adapte à l'enregistreur 1.

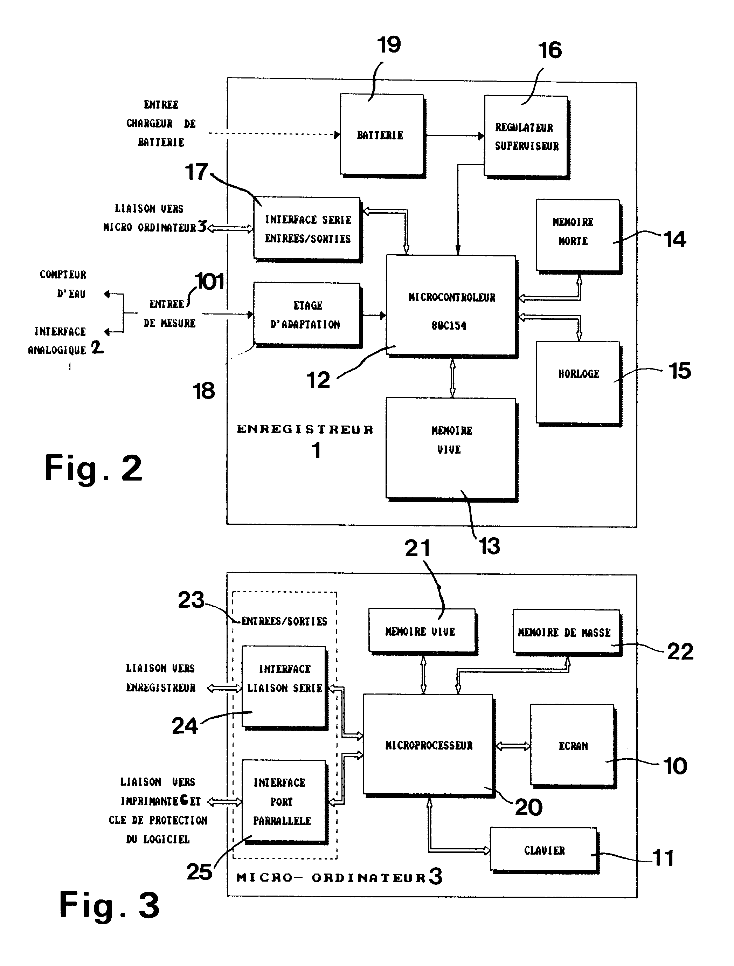

L'enregistreur 1 entrant dans l'installation, selon l'invention correspondant à la Fig. 1, est représenté schématiquement à la Fig. 2. Il est constitué d'un coffret qui comprend un microcontrôleur 12, une mémoire vive 13, une mémoire morte programmée 14, une horloge 15, une interface liaison série 17, un étage d'adaptation 18, un régulateur superviseur 16 et une batterie rechargeable 19. Le microcontrôleur 12 est relié à la mémoire vive 13, la mémoire morte programmée 14, l'horloge 15, le régulateur superviseur 16, l'interface liaison série 17 et l'étage d'adaptation 18.

Le régulateur superviseur 16 est relié à la batterie 19.

L'interface liaison série 17, l'étage d'adaptation 18 et la batterie 19 sont reliés respectivement à l'ordinateur 3, au dispositif d'entrée mesure 101 et à un chargeur de batterie.

Le dispositif d'entrée mesure 101 peut être raccordé au dispositif de conversion des grandeurs analogiques 2, dit interface analogique 2, ou il peut être raccordé à un compteur d'eau.

L'enregistreur 1 stocke dans sa mémoire vive 13 toutes les impulsions provenant du dispositif de conversion des grandeurs analogiques 2 ou du compteur d'eau. Le stockage s'arrête automatiquement lorsque la mémoire vive 13 est complètement chargée.

L'enregistreur 1 peut être utilisé dans des environnements difficiles, par exemple dans un regard très humide. Son encombrement est très réduit. Il est facile à mettre en place. Il peut être suspendu à un crochet.

La batterie 19 fournit une autonomie de deux mois à l'enregistreur 1.

Il est possible d'apporter l'enregistreur 1 dans un bureau pour le relier à l'ordinateur 3.

La Fig. 3 représente sous la forme d'un schéma fonctionnel l'ordinateur 3 de l'installation selon l'invention. L'ordinateur 3 comprend l'unité d'affichage 10, le clavier 11, un microprocesseur 20, une mémoire vive 21, une mémoire de masse 22, un dispositif d'entrées/sorties 23 comportant une interface liaison série 24 et une interface port parallèle.

Le microprocesseur 20 est relié à l'unité d'affichage 10, au clavier 11, à la mémoire vive 21, à la mémoire de masse 22 et au dispositif d'entrées/sorties 23. L'interface liaison série 24 et l'interface port parallèle permettent respectivement la liaison vers l'enregistreur 1 et la liaison vers l'imprimante 6 et la clé 5. La clé 5 est placée sur l'interface port parallèle 25 (sortie imprimante 6) de l'ordinateur 3. Elle est complètement transparente pour l'ordinateur 3.

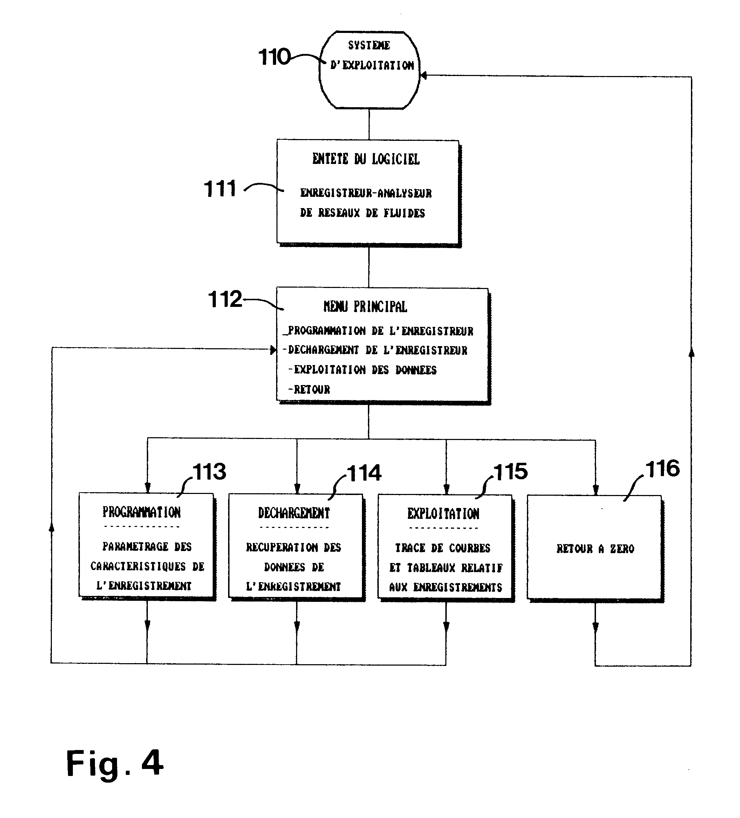

La Fig. 4 est un organigramme sommaire des différentes étapes du procédé selon l'invention.

Dans la première étape du procédé, l'utilisateur est sous un système d'exploitation 110 où il a la possibilité de réaliser différentes commandes dont l'appel d'un logiciel enregistreur-analyseur de réseaux 111. Ce logiciel enregistreur-analyseur de réseaux 111 permet de choisir différentes options au moyen d'un menu principal 112. Le menu principal 112 permet d'obtenir, soit une option de programmation 113, soit une option de déchargement 114, soit une option d'exploitation des données 115, soit de retourner au système d'exploitation 110.

L'option de programmation 113 effectue le paramètrage des caractéristiques de l'enregistrement. L'option de déchargement 114 consiste en la récupération des données de l'enregistrement. L'option d'exploitation 115 se traduit par un tracé de courbes et de tableaux relatifs aux enregistrements.

Les options de programmation 113, de déchargement 114 et d'exploitation 115 seront présentées plus précisément en regard des figures ultérieures.

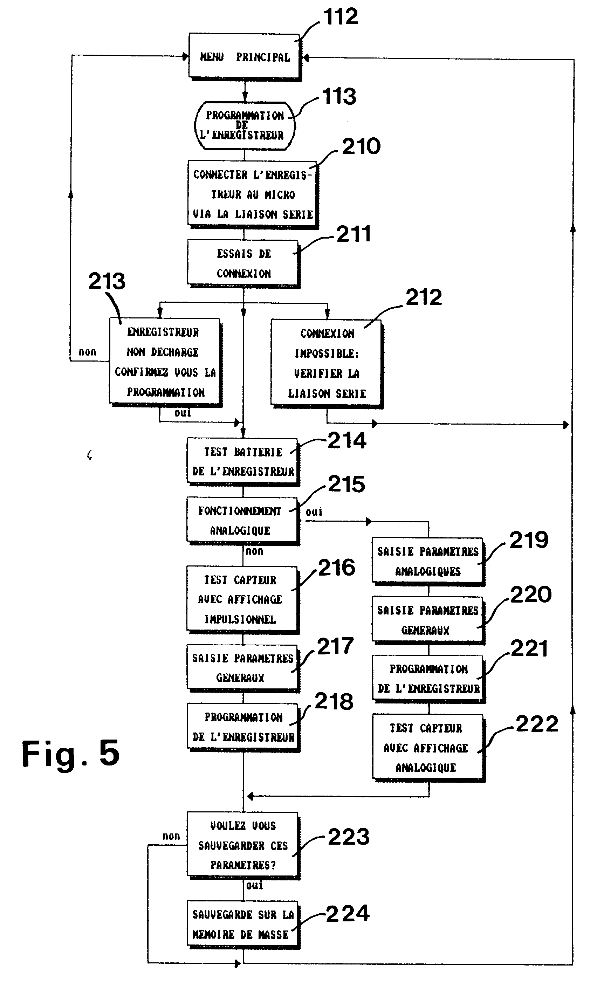

La Fig. 5 illustre par un organigramme les différentes opérations de l'option de programmation correspondant au procédé selon l'invention représenté à la Fig. 4.

La programmation 113 s'effectue par le lancement d'un programme.

Au moment du chargement et de l'exécution du programme, une routine effectue un test sur la présence de la clé électronique 5 placée sur l'interface port parallèle 25 de l'ordinateur 3, l'absence d'une clé électronique 5 contenant un codage spécial met fin à l'exécution du programme en signalant que dans cette configuration (absence de clé) il est impossible d'utiliser le programme.

La détection du code correspondant à une variante de clé électronique 5 place le logiciel dans un mode de travail spécialisé à l'analyse de relevés effectués sur des compteurs d'eau (analyse de volumes et de débits).

La détection du code correspondant à une autre variante de clé 5 place alors le logiciel dans un mode de travail lui permettant l'analyse de relevés effectués par tous types de capteurs analogiques 4 (analyse de pression, de différence, de niveau d'eau etc).

Ensuite, le procédé comprend l'opération de connexion de l'enregistreur 1 à l'ordinateur 3.

Après avoir sélectionné l'option programmation de l'enregistreur 113 dans le menu principal du programme, il est demandé à l'utilisateur d'effectuer la connexion de l'enregistreur 1 à l'ordinateur 3.

Les essais de connexion 211 se déroulent de la manière suivante :

Après la connexion 210, le microprocesseur 20 de l'ordinateur 3, va tenter, au moyen de son interface liaison série 24, d'interroger l'enregistreur 1 en lui demandant son numéro de version.

Dans l'éventualité d'une occupation ou d'une absence de réponse de l'enregistreur 1, le microprocesseur 20 de l'ordinateur 3 reformule sa demande, ce à raison de plusieurs tentatives auquel cas il déclare que la connexion est impossible. L'utilisateur doit alors vérifier la liaison série entre les interfaces 17 et 24 qui raccordent l'ordinateur 3 à l'enregistreur 1 et refaire une tentative de connexion.

Le procédé présente deux possibilités, l'enregistreur 1 n'est pas déchargé 213 ou la connexion est impossible 212.

Dans la possibilité de l'enregistreur 1 non déchargé 213, le dialogue établi, le microprocesseur 20 de l'ordinateur 3 demande, via la liaison entre les interfaces 17 et 24 à l'enregistreur 1, s'il contient ou non des données qui n'auraient pas encore été transférées vers l'ordinateur 3, si l'enregistreur 1 répond par l'affirmative (présence de données non sauvegardées), le microprocesseur 20 de l'ordinateur 3 demande à l'utilisateur par l'intermédiaire de l'unité d'affichage 10, s'il doit continuer la phase de programmation, ce qui aurait pour conséquence la perte irrémédiable des données contenues dans l'enregistreur 1 ; l'utilisateur a donc la possibilité d'interrompre la programmation pour effectuer un éventuel déchargement des données contenues dans l'enregistreur 1.

Dans le cas où la connexion est impossible 212, le procédé retourne au système d'exploitation.

L'opération 214 de test de la batterie 19 suit l'opération 213, enregistreur 1 non déchargé.

Afin de connaître l'état actuel de l'enregistreur 1 qui fonctionne de manière autonome, le microprocesseur 20 de l'ordinateur 3 lui demande de lui fournir l'état de sa batterie 19 ; l'information en est alors fournie à l'utilisateur qui, le cas échéant (batterie 19 déchargée), devra effectuer une recharge de la batterie 19 avant la mise sur le réseau 7 de l'enregistreur 1 pour effectuer la phase d'acquisition.

Le procédé représenté à la figure 5 se poursuit par l'opération 215.

L'opération 215 est un test permettant de vérifier si le fonctionnement est analogique.

En fonction du type de clé 5 présente sur le port parallèle 25 de l'ordinateur 3, le programme se comportera comme spécialisé à l'analyse de débit et volume enregistré au moyen d'un compteur d'eau, ou spécialisé dans l'analyse de relevés effectués sur tous capteurs analogiques 2.

L'opération 215, en fonction de la clé 5, est suivie par les opérations successives suivantes, l'opération 216, test du capteur impulsionnel et affichage. L'affichage 217 qui consiste en la saisie des paramètres généraux et l'opération 218 de programmation de l'enregistreur 1, ou l'opération 215, en fonction de la clé 5, est suivie par les opérations successives suivantes, l'opération 219 de saisie des paramètres analogiques, l'opération 220 de saisie des paramètres généraux, l'opération 221 de programmation de l'enregistreur 1, l'opération 222 de test du capteur analogique et d'affichage.

Dans le cas de l'analyse de débit et volume, le procédé comporte l'opération 216, test du capteur impulsionnel et affichage 216.

L'utilisateur en appliquant des variations au capteur qui sera connecté sur le compteur d'eau a la possibilité de vérifier le bon fonctionnement de la chaîne de mesure (capteur et enregistreur).

Durant cette phase de test capteur l'ordinateur 3, par l'intermédiaire de son interface liaison série 24 va questionner de manière ininterrompue l'enregistreur 1 afin qu'il lui retourne de manière quasi instantanée les variations lues sur son entrée de mesure. Ces informations directement affichées sont du type impulsionnel.

L'opération 217 consiste en la saisie des paramètres généraux.

La routine de saisie des paramètres de programmation de l'enregistreur 1 est alors exécutée, et l'utilisateur par l'intermédiaire du clavier 11 et de l'unité d'affichage 10, fournit au microprocesseur 20 de l'ordinateur 3 les informations suivantes :

– type de compteur d'eau
– poids impulsionnel du compteur (1 impulsion = 1000 litres)
– date et heure de début d'enregistrement
– date et heure de fin d'enregistrement
– date et heure actuelle
– commentaires

Les commentaires sont laissés au choix de l'utilisateur, ce qui lui permet d'afficher des informations.

L'opération 218 de programmation de l'enregistreur 1 se présente sous la forme suivante :

Le microprocesseur 20 de l'ordinateur 3 procède alors à la programmation proprement dite de l'enregistreur 1, il transfère par l'intermédiaire de son interface liaison série 24 l'ensemble des paramètres précédemment saisis par l'utilisateur vers l'enregistreur 1, ce dernier alors programmé passe aussitôt en phase dite d'acquisition.

Dans le cas de l'analyse de relevés effectués sur tous capteurs analogiques 2, le procédé comporte l'opération 219 de saisie des paramètres analogiques.

La routine de saisie des paramètres analogiques de programmation de l'enregistreur 1 est alors exécutée, et l'utilisateur par l'intermédiaire du clavier 11 et l'unité d'affichage 10, fournit au microprocesseur 20 de l'ordinateur 3 les informations suivantes :

– type de grandeur mesurée par le capteur 4
– étendue de mesure du capteur 4 en entrée 401
– type de grandeur analogique délivrée
– étendue de mesure du capteur 4 en sortie 402

Dans l'opération 220 de saisie des paramètres généraux, la routine de saisie des paramètres généraux de programmation de l'enregistreur 1 est alors exécutée, et l'utilisateur par l'intermédiaire du clavier 11 et de l'unité d'affichage 10, fournit au microprocesseur 20 de l'ordinateur 3 les informations suivantes :
- type de capteur 4 utilisé
- date et heure de début d'enregistrement
- date et heure de fin d'enregistrement
- date et heure actuelle
- commentaires

L'opération 221 de programmation de l'enregistreur 1 s'effectue de la manière suivante, le microprocesseur 20 de l'ordinateur 3 procède à la programmation proprement dite de l'enregistreur 1, il transfère par l'intermédiaire de son interface liaison série 24 l'ensemble des paramètres précédemment saisis par l'utilisateur vers l'enregistreur 1, ce dernier alors programmé passe aussitôt en phase dite d'acquisition.

Au cours de l'opération 222 de test du capteur analogique 4 avec affichage, l'utilisateur, en appliquant des variations sur son capteur 4 qui sera connecté à l'interface analogique 2 qui est un module indispensable permettant la conversion de variations analogiques en variations impulsionnelles, lui même relié à l'enregistreur 1, a la possibilité de vérifier le bon fonctionnement de la chaîne de mesure (capteur 4, interface analogique 2 et enregistreur 1).

Durant cette phase de test du capteur 4 l'ordinateur 3, par l'intermédiaire de son interface liaison série va questionner de manière ininterrompue l'enregistreur 1 afin qu'il lui retourne de manière quasi instantanée les variations lues sur son entrée de mesure 101. Ces informations sont alors traitées par le microprocesseur 20 de l'ordinateur 3 qui les convertit et les affiche dans la grandeur analogique du capteur 4 utilisé.

L'opération 218 de programmation de l'enregistreur 1 est suivie comme l'opération 222 de test du capteur analogique avec affichage de l'opération 223 de choix de sauvegarde des paramètres. Dans l'affirmative, le procédé comporte l'opération 224 de sauvegarde des paramètres dans la mémoire de masse 22 .

La programmation terminée, il est donné à l'utilisateur la possibilité 223 de sauvegarder dans la mémoire de masse 22, sur disque ou disquette, les paramètres de programmation de l'enregistrement. Dans ce cas, si l'utilisateur le désire, le microprocesseur 20 de l'ordinateur 3 va créer un fichier contenant l'ensemble de ces données et le stocker sur l'unité de disque choisie.

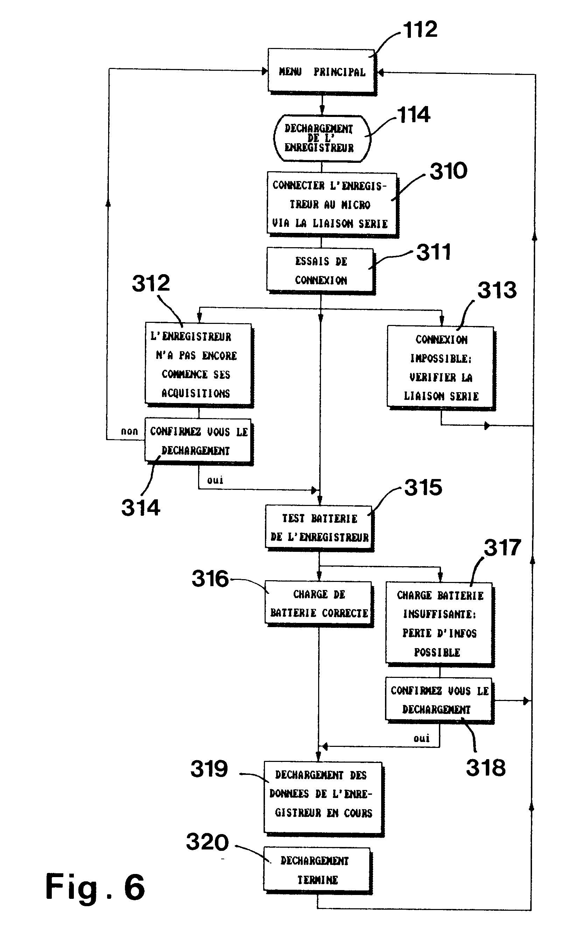

La Fig. 6 illustre par un organigramme les différentes opérations de l'option de déchargement correspondant au procédé selon l'invention représenté à la Fig. 4.

L'option de déchargement 114 comprend les opérations successives suivantes :

- l'opération 310 de connexion de l'enregistreur 1 à l'ordinateur 3,
- l'opération 311 d'essais de connexion, suivie d'une parmi trois variantes suivant le résultat
- première variante, l'opération 313 si la connexion est impossible, vérification de la liaison série entre l'ordinateur 3 et l'enregistreur 1 suivi du retour au menu principal 112,
- deuxième variante, l'opération 312 l'enregistreur n'a pas encore commencé ses acquisitions, suivie par
- l'opération 314, confirmation du déchargement qui permet le retour au menu principal 112 ou la continuation du procédé vers l'opération 315 suivante de test de la batterie 19 qui, en troisième variante peut être réalisé directement après l'opération 311 d'essais de connexion. Le procédé se prolonge par une opération 316 de charge de la batterie 19 correcte ou les deux opérations successives respectivement 317 et 318. L'opération 317 informe que la charge de la batterie 19 est insuffisante : perte d'informations possible et l'opération 318, consiste en la confirmation du déchargement qui permet le retour au menu principal 112. L'étape de déchargement 114 comprend également les deux opérations successives respectivement 319, déchargement des données de l'enregistreur 1 en cours et 320 déchargement terminé qui succèdent soit à l'opération 316 de charge de la batterie 19 correcte ou à l'opération 318 de confirmation du déchargement.

L'opération 310 de connexion de l'enregistreur 1 à l'ordinateur 3 se présente de la manière suivante :

Après avoir sélectionné l'option programmation de l'enregistreur 1 dans le menu principal du programme, il est demandé à l'utilisateur d'effectuer la connexion de l'enregistreur 1 à l'ordinateur 3.

Dans l'opération 311 d'essais de connexion, le microprocesseur 20 de l'ordinateur 3, va tenter au moyen de son interface liaison série 24 d'interroger l'enregistreur 1 en lui demandant son numéro de version.

Dans l'éventualité d'une occupation ou d'une absence de réponse de l'enregistreur 1, le microprocesseur 20 de l'ordinateur 3 reformule sa demande, ceci à raison de cinq tentatives après quoi, il déclare que la connexion est impossible.

L'utilisateur doit alors vérifier la liaison série entre les interfaces 24 et 17 qui raccorde l'ordinateur 3 à l'enregistreur 1 et refaire une tentative de connexion.

L'opération 312, l'enregistreur 1 n'a pas encore commencé ses acquisitions.

Le dialogue établi, le microprocesseur 20 de l'ordinateur 3 demande à l'enregistreur 1, via la liaison série entre les interfaces 24 et 17, s'il a déjà entamé la phase dite d'acquisition, si ce n'est pas le cas (aucune mesure effectuée), le microprocesseur 20 indique à l'utilisateur par l'intermédiaire de l'unité d'affichage 10, qu'il a la possibilité d'abandonner le déchargement, ou de l'effectuer pour récupérer, par l'intermédiaire de l'interface liaison série 24, les paramètres de programmation stockés dans la mémoire 13 de l'enregistreur 1.

L'opération 315 consiste à tester la batterie 19.

Afin de connaître l'état actuel de l'enregistreur 1 qui fonctionne de manière autonome, le microprocesseur 20 de l'ordinateur 3 lui demande de lui fournir l'état de sa batterie 19 ; dans le cas où la batterie 19 serait déchargée, sachant qu'une opération de déchargement (transfert) de l'enregistreur 1 peut prendre plusieurs minutes et qu'elle sollicite de manière importante la batterie 19, le microprocesseur 20 signale à l'utilisateur par l'intermédiaire de l'unité d'affichage 10, qu'il serait préférable de recharger la batterie de l'enregistreur 1 pour que ce dernier, par manque d'apport énergétique, ne perde ses informations jusqu'à présent mémorisées.

L'opération 319 de déchargement des données.

Le microprocesseur 20 de l'ordinateur 3, par l'intermédiaire de son interface liaison série 24, va effectuer le transfert des données contenues dans la mémoire de l'enregistreur 1 vers un fichier dans la mémoire de masse 22.

Ces données ainsi récupérées sont stockées dans des fichiers, constituant une fraction de la mémoire de masse 22, dont le nom et la destination sur disque ou disquette ont été choisis par l'utilisateur au moyen du clavier et de l'unité d'affichage 10.

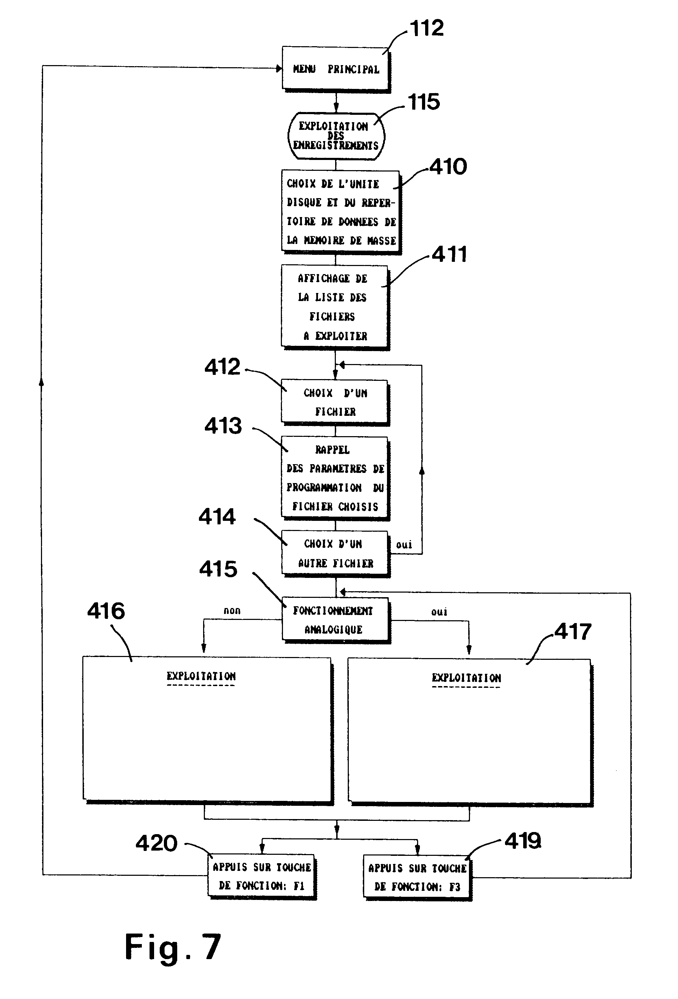

La Fig. 7 illustre par un organigramme les différentes opérations de l'option d'exploitation 115 correspondant au procédé selon l'invention représenté à la Fig. 4.

L'option d'exploitation 115 comprend les opérations successives suivantes :

– l'opération 410, sélection de l'unité de disque et du répertoire d'un répertoire de données
– l'opération 411, affichage de la liste des fichiers à exploiter,
– l'opération 412, choix d'un fichier,
– l'opération 413, rappel des paramètres d'un fichier choisi,
– l'opération 414, choix d'un autre fichier,
– l'opération 415, fonctionnement analogique ou non,
– l'opération exploitation 416 ou 417 en fonction de l'opération 415,
– l'opération 419 ou 420 appui sur touche de fonction.

L'opération 410, sélection de l'unité de disque et du répertoire d'un répertoire de données se déroule de la manière suivante :

Après que l'utilisateur ait sélectionné l'étape "exploitation des enregistrements" dans le menu principal du programme, le microprocesseur 20 de l'ordinateur 3 lui demande, par l'intermédiaire de l'unité d'affichage 10 et du clavier 11, de lui indiquer sur quelle unité de disque ainsi que dans quel répertoire il doit aller trouver les fichiers de données.

Dans l'opération 411, affichage de la liste des fichiers à exploiter, le microprocesseur 20 de l'ordinateur 3 connaissant maintenant l'endroit où se trouve les données à exploiter, exécute la routine de test du type de clé présente sur le port parallèle 25 de l'ordinateur 3, si cette dernière retourne le code spécifique au mode de fonctionnement analogique, tous les fichiers de type à enregistrement impulsionnel ou analogique sont affichés et mis à la disposition de l'utilisateur, tandis qu'un code correspondant à une clé qui retourne le code spécifique aux enregistrements de type impulsionnel, ne ferait apparaître et ne permettrait que l'utilisation de fichier de type enregistrement impulsionnel (application liée à l'analyse de débit et de volume d'eau mesurés sur les compteurs d'eau).

L'opération 412, choix d'un fichier :

Grâce au clavier 11, l'utilisateur vient pointer et sélectionner dans une liste de noms affichée par le microprocesseur 20 au moyen de l'unité d'affichage 10, le fichier qu'il désire exploiter.

L'opération 413, rappel des paramètres d'un fichier choisis :

Le choix fait, le microprocesseur 20 va ouvrir le fichier correspondant au nom demandé, et en extrait les informations paramètres de programmation ; La nouveauté du produit fait que ces paramètres peuvent être de type analogique si auparavant il y a eu choix d'un fichier d'enregistrement de ce type.

L'opération 414, choix d'un autre fichier :

A la vue des paramètres de programmation sur l'unité d'affichage 10, l'utilisateur a la possibilité, grâce aux touches de fonction 303 du clavier 11 géré par le microprocesseur 20, de continuer l'exploitation des données de ce fichier ou de procéder au choix d'un autre fichier.

L'opération exploitation 416.

En fonction du type de fichier précédemment sélectionné (impulsionnel ou analogique), un menu d'exploitation apparait : soit spécialisé dans l'analyse de débits-volumes sur compteurs d'eau, soit dans l'analyse de données provenant de tous types de capteurs analogiques 4.

Par l'intermédiaire de l'unité d'affichage 10 et du clavier 11, le microprocesseur 20 donne la possibilité à l'utilisateur de choisir dans une liste de fonctions le type de traitement qui lui permet d'analyser ses enregistrements (choix de tableaux, de courbes, de graphismes, etc).

Ladite opération 416 est une exploitation de débits-volumes sur compteur d'eau par l'affichage d'un tableau des impulsions enregistrées par l'enregistreur 1, tableau des caractéristiques générales de la consommation, courbe de débits d'un mois, courbe des débits d'une semaine, courbe des débits d'une journée, courbe des débits d'une heure, graphique des heures de pointe d'un mois, graphique des heures creuses d'un mois, graphique des volumes journaliers d'un mois, graphique des volumes horaires d'une journée et/ou impression des volumes horaires.

Tableau des impulsions enregistrées par l'enregistreur 1 :

Le microprocesseur 20 de l'ordinateur 3 va ouvrir le fichier contenant les données d'enregistrement, puis il affiche par l'intermédiaire de l'unité d'affichage 10 un tableau contenant minute par minute, à partir de la date de début d'enregistrement déterminée lors de la programmation de l'enregistreur 1, le nombre "d'impulsions" fournies par le compteur d'eau.

Un poids impulsionnel ayant auparavant été déterminé (phase de programmation), le microprocesseur 20 par calcul et affichage fait donc correspondre à ce nombre d'impulsions par minute l'information débit affichée soit en litre par seconde soit en mètre cube par heure.

Grâce aux touches 302 de déplacement du curseur 301 et aux touches de fonction du clavier ainsi que de l'unité d'affichage 10, l'utilisateur a la possibilité de visualiser, minute par minute, heure par heure ou jour par jour, les différents débits sur la durée complète de l'enregistrement.

Tableau des caractéristiques générales de la consommation :

Le microprocesseur 20 de l'ordinateur 3 va ouvrir le fichier contenant les données d'enregistrement, puis il affiche par l'intermédiaire de l'unité d'affichage 10 un tableau contenant jour par jour, du premier jour d'acquisition jusqu'au dernier, les caractéristiques de l'enregistrement suivantes :
– volume d'eau journalier
– débit moyen journalier
– heure de pointe de la journée avec son débit maximal
– heure creuse de la journée avec son débit minimal

De même que dans le tableau des impulsions, grâce aux touches 302 de déplacement du curseur 301 et aux touches 303 de fonction du clavier 11, ainsi que de l'unité d'affichage 10, l'utilisateur a la possibilité de visualiser, jour par jour, les différentes caractéristiques sur la durée complète de l'enregistrement.

Courbe de débits d'un mois :

Le microprocesseur 20 par l'intermédiaire de l'unité d'affichage 10 et du clavier 11, demande à l'utilisateur qu'il saisisse le premier jour à partir duquel il doit effectuer le tracé, puis il ouvre le fichier contenant les données d'enregistrement, se positionne à l'endroit de la donnée correspondant à la date de début de tracé puis il reformate les données correspondant à un mois d'acquisition de manière à pouvoir les afficher à l'unité d'affichage 10 sous forme de points de manière à obtenir une courbe.

La courbe retrace alors les variations de débit relevées sur le compteur d'eau.

Courbe des débits d'une semaine :

Même démarche que pour la courbe d'un mois, avec traitement effectué sur les données d'une semaine.

Courbe des débits d'une journée :

Même démarche que pour la courbe d'un mois, avec traitement effectué sur les données d'une journée.

Courbe des débits d'une heure :

Même démarche que pour la courbe d'un mois, avec traitement effectué sur les données d'une heure.

Graphique des heures de pointe d'un mois :

Le microprocesseur 20, par l'intermédiaire de l'unité d'affichage 10 et du clavier 11, demande à l'utilisateur qu'il saisisse le premier jour à partir duquel il doit effectuer le tracé, puis il ouvre le fichier contenant les données d'enregistrement, se positionne à l'endroit de la donnée correspondant à la date de début de tracé, puis il reformate les données correspondant à un mois d'acquisition de manière à pouvoir les afficher au moyen de l'unité d'affichage 10 sous forme d'histogramme.

Le graphisme retrace alors, pour chaque jour, le débit maximum relevé sur le compteur d'eau.

Graphique des heures creuses d'un mois :

Même démarche que pour les heures de pointe, sauf que le graphisme retrace alors le débit minimum du compteur de chaque journée.

Graphique des volumes journaliers d'un mois :

Même démarche que pour les heures de pointe, à l'exception du fait que le graphisme retrace alors les volumes mesurés jour par jour durant un mois sur le compteur d'eau.

Graphique des volumes horaires d'une journée :

Même démarche que pour les heures de pointe, sauf que le graphisme retrace alors les volumes mesurés heure par heure durant une journée sur le compteur d'eau.

## Impression des volumes horaires :

Le microprocesseur 20 de l'ordinateur 3 va ouvrir le fichier contenant les données d'enregistrement, puis après les avoir reformatées il les envoie par l'intermédiaire de l'interface port parallèle 25 à l'imprimante 6 qui les affiche dans un tableau contenant :
- les débits moyens heure par heure d'une semaine
- les volumes d'eau journaliers d'une semaine
- les débits moyens journaliers d'une semaine
- les heures de pointe et leur débit maximal
- les heures creuses et leur débit minimal

L'opération 417, exploitation de données mesurées par le capteur analogique 4 par l'affichage d'un tableau des valeurs enregistrées par l'enregistreur 1, tableau des caractéristiques générales, courbe d'un mois, courbe d'une semaine, courbe d'une journée, courbe d'une heure, graphique des maxi horaires journaliers, graphique des mini horaires journaliers, graphique des moyennes journalières, graphique des moyennes horaires et/ou impression des caractéristiques générales.

## Tableau des valeurs enregistrées par l'enregistreur 1 :

Le microprocesseur 20 de l'ordinateur 3 va ouvrir le fichier contenant les données d'enregistrement, en fonction de l'étendue de la grandeur analogique de sortie du capteur 4 (paramètres définis à la programmation), il reformate les données puis les affiche par l'intermédiaire de l'unité d'affichage 10 dans un tableau contenant minute par minute, à partir de la date de début d'enregistrement déterminée lors de la programmation de l'enregistreur, la grandeur analogique délivrée par le capteur 4.

A cette grandeur analogique, le microprocesseur 20 par calcul et affichage fait correspondre dans le tableau la grandeur de mesure du capteur.

Grâce aux touches 302 de déplacement du curseur 301 et aux touches 303 de fonction du clavier 11 ainsi que de l'unité d'affichage 10, l'utilisateur à la possibilité de visualiser, minute par minute, heure par heure ou jour par jour, les différentes valeurs sur la durée complète de l'enregistrement.

## Tableau des caractéristiques générales :

Le microprocesseur 20 de l'ordinateur 3 va ouvrir le fichier contenant les données d'enregistrement, après avoir reformaté les données en fonction de l'étendue de mesure en entrée 401 et sortie 402 du capteur 4, il affiche par l'intermédiaire du périphérique unité d'affichage 10 un tableau contenant jour par jour, et ce du premier jour d'acquisition jusqu'au dernier, les caractéristiques de l'enregistrement suivantes :
- moyenne journalière
- moyenne heure de pointe
- moyenne heure creuse

De même que dans le tableau des impulsions, grâce aux touches 302 de déplacement du curseur 301 et aux touches 303 de fonction du clavier 11 ainsi que de l'unité d'affichage 10, l'utilisateur à la possibilité de visualiser, jour par jour, les différentes caractéristiques sur la durée complète de l'enregistrement.

## Courbe d'un mois :

Le microprocesseur 20 par l'intermédiaire de l'unité d'affichage 10 et du clavier 11, demande à l'utilisateur qu'il saisisse le premier jour à partir duquel il doit effectuer le tracé, puis il ouvre le fichier contenant les données d'enregistrement, se positionne à l'endroit de la donnée correspondant à la date de début de tracé, puis en fonction des paramètres analogiques du capteur 4, il reformate les données correspondant à un mois d'acquisition de manière à pouvoir les afficher au moyen de l'unité d'affichage 10 sous forme de points de manière à obtenir une courbe.

La courbe retrace alors les variations de la grandeur mesurée par le capteur 4.

## Courbe d'une semaine :

Même démarche que pour la courbe d'un mois, avec traitement effectué sur les données d'une semaine.

## Courbe d'une journée :

Même démarche que pour la courbe d'un mois, avec traitement effectué sur les données d'une journée.

## Courbe d'une heure :

Même démarche que pour la courbe d'un mois, avec traitement effectué sur les données d'une heure.

## Graphique des maxi horaires journaliers :

Le microprocesseur 20 par l'intermédiaire de l'unité d'affichage 10 et du clavier, demande à l'utilisateur qu'il saisisse le premier jour à partir duquel il doit effectuer le tracé, il ouvre le fichier contenant les données d'enregistrement, se positionne à l'endroit de la donnée correspondant à la date de début de tracé, puis en fonction des paramètres analogiques du capteur 4, il reformate les données correspondant à un mois d'acquisition de manière à pouvoir les afficher au moyen de l'unité d'affichage 10 sous forme d'histogramme.

Le graphisme retrace alors, pour chaque jour les maxima horaires relevés sur le capteur.

Graphique des mini horaires journaliers :

Même démarche que pour les maxima horaires journaliers, sauf que le graphisme retrace alors, les minima horaires d'une journée d'acquisition.

Graphique des moyennes journalières :

Même démarche que pour les maxima horaires journaliers, sauf que le graphisme retrace alors la moyenne journalière d'un mois d'acquisition.

Graphique des moyennes horaires :

Même démarche que pour les maxima horaires journaliers, sauf que le graphisme retrace alors la moyenne horaire d'une journée d'acquisition.

Impression des caractéristiques générales :

Le microprocesseur 20 de l'ordinateur 3 va ouvrir le fichier contenant les données d'enregistrement, puis après les avoir reformatées en fonction des paramètres analogiques du capteur 4, il les envoi par l'intermédiaire de l'interface port parallèle 25 à une imprimante 6 qui les affiche dans un tableau contenant :
– les valeurs moyennes heure par heure d'une semaine
– les valeurs moyennes journalières d'une semaine
– les valeurs moyennes aux heures de pointe
– les valeurs moyennes aux heures creuses.
Suivant une variante de l'invention, la clé 5 permet uniquement l'analyse de fichiers de type dit à enregistrement impulsionnel.

Selon d'autres variantes la clé 5 permet l'analyse en mode analogique ou elle permet l'analyse de fichiers de type dit à enregistrement impulsionnel et à enregistrement analogique.

Une clé spécifique 5 permet d'utiliser un programme unique donnant accès à l'exploitation de l'enregistreur 1 en enregistreur d'impulsions et aussi en enregistreur de grandeurs analogiques continues grâce à l'interface analogique 2.

Le procédé selon l'invention se caractérise en ce qu'après la connexion de l'enregistreur 1 à l'ordinateur 3, il comprend soit une prise de mesure impulsionnelle, soit une prise de mesure en mode analogique.

## Revendications

**1.-** Procédé d'analyse et de visualisation de mesures enregistrées sur un réseau de fluide (7) par un moyen d'acquisition comprenant un enregistreur (1) comportant au moins un microcontrôleur (12), une mémoire vive (13), une mémoire morte programmée (14) et une horloge (15), caractérisé en ce que ledit procédé comprend au moins les étapes successives suivantes :
– une programmation de l'enregistreur (1),
– une prise des mesures sur le réseau de fluide (7) dite acquisition,
– un déchargement des mesures dans un fichier,
– une exploitation des mesures suivant une fonction permettant d'analyser et de visualiser lesdites mesures.

**2.-** Procédé d'analyse et de visualisation de mesures suivant la revendication 1, caractérisé en ce que l'étape de programmation de l'enregistreur (1) comprend au moins les opérations suivantes :
– un lancement du programme,
– une connexion de l'enregistreur (1) à un ordinateur (3),
– une saisie des paramètres généraux,
– une programmation de l'enregistreur (1).

**3.-** Procédé selon la revendication 2, caractérisé en ce qu'après la connexion de l'enregistreur (1) à un ordinateur (3), il comprend soit une prise de mesure impulsionnelle, soit une prise de mesure en mode analogique.

**4-** Procédé d'analyse et de visualisation de mesures suivant la revendication 1, caractérisé en ce que l'étape de déchargement comprend au moins les opérations suivantes :
– une connexion de l'enregistreur (1) à un ordinateur (3),
– un transfert des mesures de l'enregistreur (1) dans un fichier de l'ordinateur (3).

**5.-** Procédé d'analyse et de visualisation de mesures suivant la revendication 1, caractérisé en ce que l'exploitation des mesures comprend au moins les opérations suivantes :
– sélection d'un disque ou d'un répertoire de données dans une mémoire de masse (22) d'un ordinateur (3),
– affichage d'une liste de fichiers à exploiter,
– choix de l'un desdits fichiers,
– appel d'un menu d'exploitation
– choix d'au moins un type d'exploitation des mesures enregistrées.

**6.-** Procédé suivant la revendication 5, caractérisé en ce que le fichier choisi contient des mesures analogiques.

**7.-** Installation d'analyse et de visualisation de mesures enregistrées sur un réseau de fluide (7), du type comprenant un moyen d'acquisition comportant au moins un microcontrôleur (12), une mémoire vive

(13), une mémoire morte programmée (14) et une horloge (15), caractérisée en ce que ledit moyen d'acquisition comporte un dispositif de conversion des grandeurs analogiques (2) mesurées en impulsions par un capteur (4), et comprenant également une batterie (19) et/ou un régulateur superviseur (16)

8.- Installation suivant la revendication 7, caractérisée en ce qu'elle comprend, outre le moyen d'acquisition, au moins un microprocesseur (20), un clavier (11), une unité d'affichage (10), une mémoire vive (21), une mémoire de masse (22) et un moyen d'entrée/sortie (23) adapté pour transférer les impulsions du moyen d'acquisition vers le microprocesseur (20) adapté pour traiter les impulsions suivant des paramètres de programmation.

9.- Installation suivant la revendication 7, caractérisée en ce qu'elle comprend au moins une clé électronique (5) permettant l'analyse de fichiers de type dit à enregistrement impulsionnel.

10.- Installation suivant la revendication 7, caractérisée en ce qu'au moins une clé (5) permet l'analyse en mode analogique.

11.- Installation suivant la revendication 7, caractérisée en ce qu'elle comprend au moins une clé (5) permettant l'analyse de fichiers de type dit à enregistrement impulsionnel et à enregistrement analogique.

12.- Installation suivant la revendication 7, caractérisée en ce que le capteur (4) comprenant un cordon équipé d'un connecteur à visser, étanche qui s'adapte directement au dispositif de conversion des grandeurs analogiques (2).

13.- Installation suivant la revendication 7, caractérisée en ce que la batterie (19), le régulateur (16), le microcontrôleur (12), la mémoire vive (13), la mémoire morte programmée (14) et l'horloge (15) forment un enregistreur (1) possèdant une autonomie d'au moins deux mois.

14.- Installation suivant l'une quelconque des revendications 7 à 13, caractérisée en ce que la batterie (19), le régulateur (16), le microcontrôleur (12), la mémoire vive (13), la mémoire morte programmée (14) et l'horloge (15) sont compris dans un coffret formant enregistreur.

Fig. 1

**Fig. 2**

**Fig. 3**

**SYSTEME D'EXPLOITATION** — 110

**ENTETE DU LOGICIEL** — 111
ENREGISTREUR-ANALYSEUR
DE RESEAUX DE FLUIDES

**MENU PRINCIPAL** — 112
_PROGRAMMATION DE L'ENREGISTREUR
-DECHARGEMENT DE L'ENREGISTREUR
-EXPLOITATION DES DONNEES
-RETOUR

**PROGRAMMATION** — 113
----------
PARAMETRAGE DES
CARACTERISTIQUES DE
L'ENREGISTREMENT

**DECHARGEMENT** — 114
----------
RECUPERATION DES
DONNEES DE
L'ENREGISTREMENT

**EXPLOITATION** — 115
----------
TRACE DE COURBES
ET TABLEAUX RELATIF
AUX ENREGISTREMENTS

**RETOUR A ZERO** — 116

# Fig. 4

Fig. 5

112

MENU PRINCIPAL

114

DECHARGEMENT
DE L'
ENREGISTREUR

310

CONNECTER L'ENREGIS-
TREUR AU MICRO
VIA LA LIAISON SERIE

311

ESSAIS DE
CONNEXION

312

L'ENREGISTREUR
N'A PAS ENCORE
COMMENCE SES
ACQUISITIONS

313

CONNEXION
IMPOSSIBLE:
VERIFIER LA
LIAISON SERIE

non | CONFIRMEZ VOUS LE
DECHARGEMENT

oui

314

315

TEST BATTERIE
DE L'ENREGISTREUR

316

CHARGE DE
BATTERIE CORRECTE

317

CHARGE BATTERIE
INSUFFISANTE:
PERTE D'INFOS
POSSIBLE

CONFIRMEZ VOUS LE
DECHARGEMENT

oui

318

319

DECHARGEMENT DES
DONNEES DE L'ENRE-
GISTREUR EN COURS

320

DECHARGEMENT
TERMINE

# Fig. 6

112

MENU PRINCIPAL

115

EXPLOITATION
DES
ENREGISTREMENTS

410

CHOIX DE L'UNITE
DISQUE ET DU REPER-
TOIRE DE DONNEES DE
LA MEMOIRE DE MASSE

411

AFFICHAGE DE
LA LISTE DES
FICHIERS
A EXPLOITER

412

CHOIX D'UN
FICHIER

413

RAPPEL
DES PARAMETRES DE
PROGRAMMATION DU
FICHIER CHOISIS

414

CHOIX D'UN
AUTRE FICHIER

oui

415

FONCTIONNEMENT
ANALOGIQUE

non                              oui

416                              417

EXPLOITATION          EXPLOITATION

420                              419

APPUIS SUR TOUCHE
DE FONCTION: F1

APPUIS SUR TOUCHE
DE FONCTION: F3

Fig. 7

**Office européen des brevets**

# RAPPORT DE RECHERCHE EUROPEENNE

Numero de la demande

EP    92 47 0008

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 275 739 (COMPAGNIE GENERALE DES EAUX SA)<br><br>* page 3, ligne 9 - ligne 45 *<br>* page 4, ligne 43 - ligne 46 *<br>--- | 1-4,7,8, 13 | G01D1/00<br>G01F15/06 |
| Y | EP-A-0 094 054 (H.J. HUBNER)<br>* page 7, ligne 28 - page 8, ligne 21 *<br>--- | 1-4 | |
| Y | ADVANCES IN INSTRUMENTATION<br>vol. 38, no. 2, Octobre 1983, RESEARCH TRIANGLEL PARK, NC, USA<br>pages 1323 - 1335;<br>J.ROSS ET AL.: 'smart telemetry -transmitter and recorder'<br>* figure 2 *<br>--- | 7,8,13 | |
| A | GB-A-2 110 421 (STRESS ENGINEERING SERVICES LIMITED)<br>* page 2, ligne 29 - page 3, ligne 12 *<br>--- | 10,11 | |
| A | FR-A-2 640 747 (CONSTRUCTIONS MECANIQUES PERNIN,SA)<br>* abrégé *<br><br>----- | 14 | **DOMAINES TECHNIQUES RECHERCHES (Int. Cl.5)**<br><br>G01D<br>G01F |

Le présent rapport a été établi pour toutes les revendications

| Lieu de la recherche | Date d'achèvement de la recherche | Examinateur |
|---|---|---|
| LA HAYE | 29 MAI 1992 | LUT K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)